# EUROPÄISCHE PATENTSCHRIFT

(11) **EP 0 687 657 B1**
(45) Veröffentlichungstag und Bekanntmachung des Hinweises auf die Patenterteilung: **09.09.1998**
(21) Anmeldenummer: 95107794.0
(22) Anmeldetag: 22.05.1995
(51) Int. Cl.: C04B 41/49, C09D 183/04

(54) **Polysiloxan-Zusammensetzungen, Verfahren zu ihrer Herstellung und ihre Verwendung für Beschichtungen**
Polysiloxane compositions, préparation and use for coatings
Compositions de polysiloxane, leur préparation et usage pour revêtements

(30) Priorität: 03.06.1994 DE 4419574
(43) Veröffentlichungstag der Anmeldung: 20.12.1995
(73) Patentinhaber: BAYER AG, 51368 Leverkusen (DE)
(72) Erfinder: Wagner, Gebhard, Dr., D-51519 Odenthal (DE); Käsler, Karl-Heinz, D-51467 Bergisch Gladbach (DE); Mazanek, Jan, D-51061 Köln (DE); Moretto, Hans-Heinrich, Dr., D-51375 Leverkusen (DE)

(56) Entgegenhaltungen:
- EP-A- 0 193 717
- EP-A- 0 430 156
- EP-A- 0 518 324

## Beschreibung

Die vorliegende Erfindung betrifft neuartige Mischungen, enthaltend mindestens ein Polysiloxan, mindestens einen reaktiven Füllstoff, mindestens ein Pigment und/oder einen nichtreaktiven Füllstoff und gegebenenfalls weitere Zusätze, ein Verfahren zur Herstellung sowie deren Verwendung.

Poröse mineralische Untergründe, wie Baustoffe aus Kalksandstein, Beton oder Fassaden, Putze u.a. können nach verschiedenen Methoden gegen Umwelteinflüsse geschützt werden. Früher bediente man sich dabei nicht-wäßrigen Lacksystemen, wie sie z.B. in EP-A 0430156 beschrieben sind.

Die Beschichtung der Baustoffe und/oder Fassaden mit filmbildenden Beschichtungen hat sich mittlerweile durchgesetzt.

Nach dem Stand der Technik bestehen diese Beschichtungen im wesentlichen aus organischen Polymerdispersionen (Bindemitteln), Pigmenten und Füllstoffen und enthalten in einigen Fällen Polysiloxane zur Verbesserung der wasserabweisenden Wirkung.

Die Bemühungen der Bau- und Baustoffindustrie, den Anteil an organischen Polymeren zu reduzieren oder vorzugsweise ganz zu vermeiden und so umweltverträglichere Beschichtungen zu erhalten, führten zur Entwicklung von Silikatfarben. Diese weitgehend anorganischen Beschichtungssysteme bestehen im wesentlichen aus wasserlöslichen Silikaten, denen kleine Mengen an organischen Polymerdispersionen sowie Pigmente, Füllstoffe und gegebenenfalls zur Erhöhung der wasserabweisenden Wirkung Polysiloxane zugemischt werden.

Solche Beschichtungssysteme haben jedoch den Nachteil, daß sie in der Frühphase der Aushärtung gegenüber Regen und anderen atmosphärischen Einflüssen wie Schmutz und/oder Mikroorganismen nicht ausreichend beständig sind.

Anorganische Beschichtungssysteme sind z.B. aus EP-A 0193717 zur Beschichtung von Entspieglungsschichten bekannt. Ebenfalls eingesetzt werden können zur wasserabweisenden Beschichtung, die in EP-A 0518324 unter anderem aufgeführten aminofunktionelle Organopolysiloxane.

Aufgabe der vorliegenden Erfindung war es, wasserabweisende, bereits bei Temperaturen unter 100°C, vorzugsweise bei Raumtemperatur, ausreichend hartende Beschichtungen mit einem möglichst geringen Anteil an organischen Polymeren bereitzustellen.

Es wurde nun gefunden, daß bestimmte Mischungen aus
A) mindestens einem Polysiloxanharz,
B) mindestens einer kolloidalen Kieselsäure in Form eines Kieselsols,
C) mindestens einem anorganischen Pigment und/oder eines anorganischen Füllstoffs und
D) gegebenenfalls weiteren Zusätzen, wie organischen Polymerdispersionen
überragende Eigenschaften gegenüber dem Stand der Technik aufweisen.

Gegenstand der vorliegenden Erfindung sind somit Mischungen, enthaltend Wasser als Dispergiermittel und
A) 10 - 60 Gew.-%, vorzugsweise 15 - 40 Gew.-%, besonders bevorzugt 25 - 40 Gew.-%, mindestens eines Polysiloxanharzes,
B) 5 - 65 Gew.-%, bevorzugt 10 - 50 Gew.-%, besonders bevorzugt 20 - 40 Gew.-% mindestens einer kolloidalen Kieselsäure in Form eines Kieselsols,
C) 5 - 80 Gew.-%, bevorzugt 20 - 70 Gew.-%, besonders bevorzugt 30 - 60 Gew.-% mindestens eines anorganischen Pigments und/oder anorganischen Füllstoffes sowie gegebenenfalls
D) 0 - 30 Gew.-% eines weiteren Zusatzstoffes oder eines Gemisches aus mehreren Zusatzstoffen D),
wobei die Summe der Komponenten A), B), C) und D), bezogen auf die Wirksubstanz, 100 Gew.-% beträgt.

In den erfindungsgemäßen Mischungen beträgt der Gehalt an D) vorzugsweise mindestens 0,1 Gew.-%.

Als Komponente A) wird vorzugsweise ein hydroxyfunktionelles Polysiloxanharz oder ein Gemisch aus mehreren Polysiloxanharzen eingesetzt, wie sie in EP-A 51 418, S. 3, Zeilen 14-52, beschrieben sind. Besonders bevorzugt sind Polysiloxanharze, die einen Anteil von 20 - 95, bevorzugt 40 - 80, besonders bevorzugt 40 - 60 Gew.-%, an trifunktionellen Bausteinen der allgemeinen Formel, 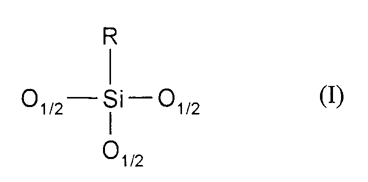 aufweisen, wobei
- R: einen beliebigen organischen Rest mit Si-C-Verknüpfung bezeichnet und
- R: bevorzugt einem C₁-C₁₄-Alkylrest entspricht.

Bevorzugt wird die Komponente A) als wäßrige Emulsion eingesetzt. Der Einsatz von A) in einem organischen Lösemittel ist ebenfalls möglich, er hat lediglich ökologische Nachteile.

Die Komponente A) kann jedoch ebenso als Mischung mehrerer wäßriger Emulsionen vorliegen. Wird die Komponente A) in Form einer wäßrigen Emulsion eingesetzt, so liegt deren Siloxangehalt zwischen 5 und 80 Gew.-%, bevorzugt zwischen 10 und 70 Gew.-%, besonders bevorzugt zwischen 20 und 60 Gew.-%. Komponente A) kann jedoch neben Wasser gegebenenfalls noch weitere Lösemittel enthalten. Es sollte vorzugsweise mindestens ein Emulgator und/oder ein rheologisches Additiv, z.B. ein Verdickungsmittel, zugesetzt werden. Als Emulgatoren sind sowohl kationische als auch anionische Emulgatoren einsetzbar. Bevorzugt sind nichtionische Emulgatoren. Die in Form einer Emulsion vorliegende Komponente A) kann Emulgatoren, Verdickungsmittel und auch andere Hilfsstoffe in Mengen von 0,5 - 15 Gew.-%, bevorzugt 1 - 6 Gew.-%, besonders bevorzugt 1,5 - 5 Gew.-%, enthalten.

Als weiteres Zusatzmittel kann Komponente A) 0 - 5 Gew.-%, bevorzugt 0 - 2 Gew.-%, besonders bevorzugt 0 - 1 Gew.-% eines Bakterizids oder Fungizids enthalten. Die Komponente A) kann sowohl aus reinen Polysiloxanharzen oder auch in Form entsprechender Emulsionen in Wasser sowie im Gemisch mit Wasser und weiteren Lösungsmitteln vorliegen. Zudem kann die Komponente A) zusätzlich Katalysatoren enthalten. Der Gehalt an Katalysatoren kann bis zu 1 Gew.-%, bezogen auf die Komponente A), betragen, wobei übliche Kondensationskatalysatoren, wie beispielsweise Organozinnverbindungen, Organotitanverbindungen und Organoaluminiumverbindungen einsetzbar sind.

In den erfindungsgemäßen Mischungen hat die kolloidale Kieselsäure dabei vorzugsweise einen Gehalt von von 5 - 50 Gew.-% SiO₂, bevorzugt 10 - 40 Gew.-%, SiO₂, besonders bevorzugt 15 - 35 Gew.-% SiO₂. Die Kieselsolteilchen können auch nach den bekannten Verfahren oberflächenmodifiziert sein. Ebenfalls bevorzugt wird als Komponente B) gegebenenfalls modifiziertes Kieselsol eingesetzt, wie es in den DE-B 2 408 896, US-A 2 892 797, US-A 2 574 902, US-A 2 457 971, US-A 2 668 149 und US-A 2 650 200 beschrieben ist. Besonders bevorzugt sind Kieselsole mit einer Partikelgröße von 5 - 100 Nanometer, ganz besonders bevorzugt 10 - 30 Nanometer.

In den erfindungsgemäßen Mischungen entspricht Komponente C) einem anorganischen Pigment und/oder einem anorganischen Füllstoff wie z.B. Glimmer, Aluminiumoxid, Magnesium- und Calciumphosphate und/oder -carbonate, -carbide, Nitride, Magnesiumoxid, Aluminiumhydroxid, Titandioxid, verschiedene Eisenoxide, Siliciumcarbid, Zinkoxid, Aluminiumbronze, Zinn- und Zinkstaub, Phthalocyaninblau, verschiedene Spinelle, Ruß, Graphit, Glas- und Emailpulver usw. Ganz besonders bevorzugt ist C) beispielsweise Eisenoxid, Glimmer und/oder Titandioxid.

Die Komponente D) kann jeder Zusatzstoff, der zur Herstellung von Lacken und Farben bekannt ist, sein, wie z.B. Lackadditive, wie Dispergier-, Verlauf-, Verdickungs-, Entschäumungs- und andere Hilfsmittel, Fungizide, Bakterizide, Stabilisatoren, Inhibitoren sowie Katalysatoren. D) kann aber auch ein Polymer oder ein Gemisch aus mehreren Polymeren sein, wie beispielsweise Cellulose, Polyether, Polyacrylate, Polystyrol/acrylate, Polyurethane, Weichmacher sowie verschiedene anorganische Harze, bevorzugt als wasserverdünnbare Dispersionen. Besonders bevorzugt sind D) organische Polymerdispersionen, wie Styrol/Acrylat oder Acrylatdispersionen.

Die erfindungsgemäßen Mischungen können auch organische, metallorganische und/oder anorganische Korrosionsinhibitoren enthalten, wie z.B. Phosphorsäurederivate, diverse Amine, substituierte Benztriazole, Nitrosophthalsäuresalze, substituierte Phenole oder ähnliches.

Gegenstand der vorliegenden Erfindung ist auch ein Verfahren zur Herstellung der erfindungsgemäßen Mischungen, wobei die Einzelkomponenten A) bis C) und gegebenenfalls D) bei Raumtemperatur miteinander verrührt werden. Die Einzelkomponenten können dabei in beliebiger Reihenfolge zusammengemischt und nach bekannten Verfahren miteinander verrührt werden, bis eine homogene Mischung entstanden ist. Ebenso können zunächst z.B. Mischungen aus den Komponenten A) und B) hergestellt werden, zu denen dann getrennt oder zusammen zubereitete wäßrige Dispersionen der Komponenten C) und gegebenenfalls D) zugemischt werden. Es können aber auch Mischungen aus den Komponenten B) mit C) und/oder gegebenenfalls D) als Dispersionen hergestellt werden, die dann zur Komponente A) zugemischt werden. In einer bevorzugten Ausführungsform der vorliegenden Erfindung werden getrennt hergestellte Einzelemulsionen und/oder Dispersionen der Komponenten A), B) C) bzw. D) miteinander verrührt. Besonders bevozugt ist das Verrühren der Komponente C) und D) zu einer Dispersion und das anschließende Verrühren mit der Mischung aus den Komponenten A) und B).

Zur Herstellung der Dispersionen aus Komponenten B), C) bzw. D) werden die zur Herstellung von Lacken angewandten Methoden, wie Kugelmühlen und andere intensive Mischverfahren bevorzugt. Der Einsatz verschiedener Hilfsstoffe, insbesondere Dispergiermittel, wie Polyacrylsäurederivate, Polyphosphate, Phosphonocarbonsäurederivate ist bei der Herstellung dieser Mischungen bevorzugt. Zur Stabilisierung der erfindungsgemäßen Beschichtungssysteme und deren Komponenten und zum Schutz vor Sedimentation können verschiedene organische und anorganische Verbindungen, wie beispielsweise Bentonite, Cellulosen, Polyacrylate oder Polyurethanverdicker, eingesetzt werden.

Die Dispersionen aus den erfindungsgemäßen Mischungen enthalten 10 - 90 Gew.-%, bevorzugt 20 - 80 Gew.-%, besonders bevorzugt 30 - 70 Gew.-% Feststoff. Die wäßrige Phase kann gegebenenfalls organische Lösemittel enthalten.

Gegenstand der vorliegenden Erfindung ist auch ein Verfahren zur Herstellung von Beschichtungen aus den erfindungsgemäßen Mischungen, wobei die Mischung auf das zu beschichtende Material aufgebracht und 1 bis 600 Minuten bei Temperaturen < 100°C, vorzugsweise Raumtemperatur, getrocknet oder aber während der Herstellung des zu verwendenden Substrats, z.B. bei der Herstellung von Betonfertigteilen, aufgebracht wird. Vorzugsweise werden die Mischungen in Form einer wäßrigen Dispersion eingesetzt.

Als zu beschichtende Materialien können nahezu alle porösen anorganischen Materialien eingesetzt werden, wie Baustoffe aus Kalksandstein, Beton, Ziegeln, Gips sowie Fassaden verschiedenster Zusammensetzung. Besonders bevorzugt sind Beton-Formteile, Kalksandstein und Fassaden jeder Art. Eine besonders bevorzugte Ausführungsform der vorliegenden Erfindung ist das Aufbringen der erfindungsgemäßen Beschichtungen auf Materialien während des Herstellungsprozesses. Beispielsweise sei hieb die Produktion von Beton-Dachsteinen genannt, bei der die erfindungsgemäßen Beschichtungen bevorzugt in einem oder zwei nacheinander folgenden Schritten aufgetragen werden, die auf den Reaktionsablauf der Herstellung abgestimmt sind.

Die erfindungsgemäßen Beschichtungen besitzen bereits nach Trocknung bei Raumtemperatur eine ausreichende Festigkeit, um transportiert und/oder anders gehandhabt zu werden. Sie können jedoch auch bei erhöhten Temperaturen nachbehandelt werden, die dem jeweiligen Anwendungszweck angepaßt sind. So sind z.B. bei der Herstellung von beschichteten Beton-Dachsteinen Temperaturen um 70°C bevorzugt. Die erfindungsgemäßen Beschichtungen sind sofort nach Trocknung dauerhaft beständig gegen atmosphärische Einflüsse, Verschmutzung und den Angriff von Mikroorganismen.

Die erfindungsgemäßen Beschichtungen verleihen dem beschichteten Material hohe wasserabweisende Wirkung. Durch das Fehlen oder den niedrigen Anteil an organischen Bestandteilen sind sie in hohem Maße umweltverträglich.

Die zu beschichtenden Materialien können je nach Art und Anwendungszweck vorbehandelt oder unvorbehandelt eingesetzt werden. Eine etwaige Vorbehandlung kann nach allen bekannten Verfahren, wie beispielsweise der Strahlbehandlung, durchgeführt werden.

Das Aufbringen der erfindungsgemäßen Mischungen auf eine feste Unterlage erfolgt bevorzugt nach der Spritz-, Tauch-, Rollen- und Streichtechnik. Je nach Anforderungen können auf diese Weise Beschichtungen mit Schichtdicken von 5 - 300 µm, bevorzugt 10 - 150 µm, besonders bevorzugt 15 - 100 µm, hergestellt werden.

Gegenstand der vorliegenden Erfindung ist auch die Verwendung der erfindungsgemäßen Mischungen zur Beschichtung von Baustoffen und Fassaden und Putzen beliebiger Art.

Die nachfolgenden Beispiele erläutern die Erfindung. Die Erfindung selber ist jedoch nicht auf diese Beispiele beschränkt.

### Ausführungsbeispiele

Folgende Substanzen werden in den Beispielen eingesetzt:
**I) als Polysiloxane:**
   Ia) Wäßrige Emulsion eines hydroxyfunktionellen Methylsiliconharzes der mittleren Zusammensetzung T₂₁₀D₂₃M₄ mit einem mittleren Molekulargewicht von ca. 12000
**II) als reaktive anorganische Füllstoffe:**
   IIa) 30 %ige wäßrige kolloidale Kieselsäuresuspension mit einer BET-Oberfläche von 100 m²/g und einem pH-Wert von 10
   Ib) 30 %iges Kaliummethylsiliconat in Wasser mit 16 % Methylsilikongehalt und 14 % Kaliumhydroxid
**III) als Pigmente und Füllstoffe, Verflüssiger:**
   siehe Herstellung der Slurries (Tabelle 1)

### Beispiel 1:

Allgemeine Vorschrift zur Herstellung der Slurries.

Emails, Pigmente und Füllstoffe werden gemäß der Mengenangabe in Tabelle 1 in 120 g Wasser eingetragen und ca. 30 min mit dem Dissolver bei 3000 Upm gerührt. Anschließend wird Bayhibit S® zugesetzt. Die Mischung wird 1 h bei 1 800 Upm homogenisiert.

**Tabelle 1**

| Einwaagen der Einzelkomponenten (Gew.-Teile) zur Herstellung der Slurries | | | | |
|---|---|---|---|---|
| | Slurry-Nr. Bestandteile in Gew.-Teilen | 1 | 2 | 3 |
| | Eisenoxidrot¹⁾ | 59,8 | 29,9 | - |
| | Eisenoxidschwarz²⁾ | - | - | 29,9 |
| | Kreide³⁾ | - | 20,9 | 20,9 |
| | Talkum AT 1⁴⁾ | - | 9,0 | 9,0 |
| | Bayhibit S⁵⁾ | 0,3 | 0,3 | 0,3 |
| | Wasser | 39,9 | 39,9 | 39,9 |

| | | | | |
|---|---|---|---|---|
| ¹⁾ Bayferrox Rot 120 FS, Lieferant Bayer AG | | | | |
| ²⁾ Bayferrox Schwarz 318 M, Lieferant Bayer AG | | | | |
| ³⁾ Kreide BLP 2, Lieferant Omya GmbH | | | | |
| ⁴⁾ Talkum AT 1, Lieferant Norwegian Talc Minerals A.S. | | | | |
| ⁵⁾ Bayhibit S (Natriumsalz der Phosphonotricarbonsäure) Lieferant Bayer AG, (Dispergiermittel) | | | | |

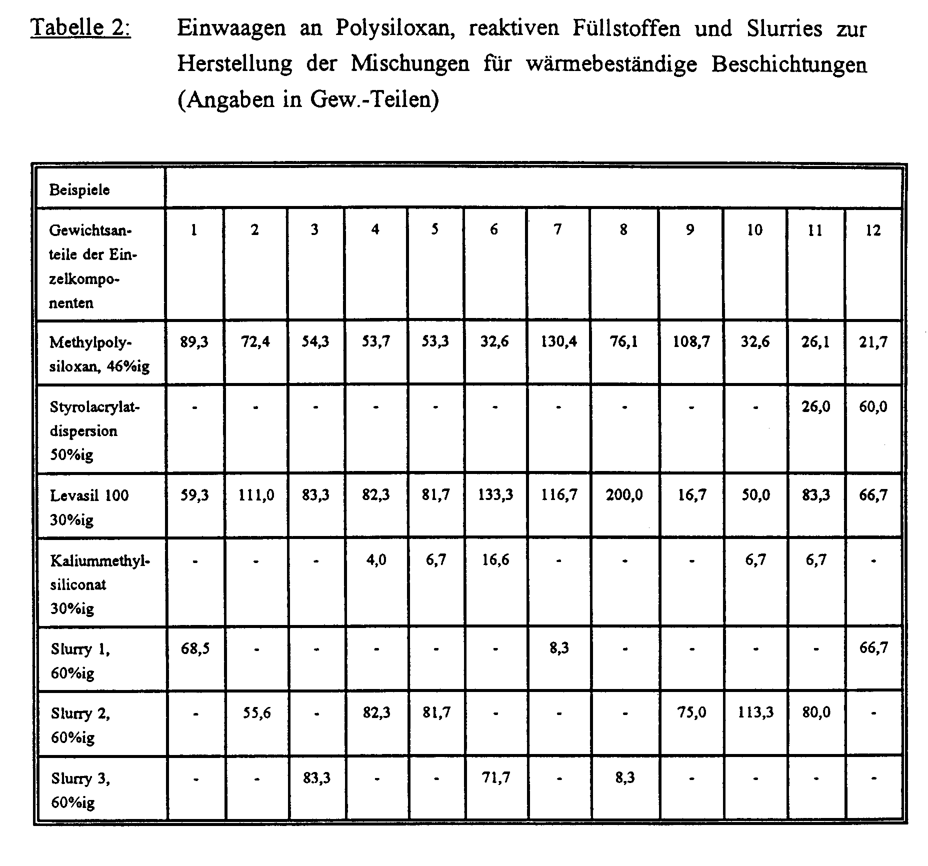

## Patentansprüche

1. Mischungen, enthaltend Wasser als Dispergiermittel und
A) 10 bis 60 Gew.-% mindestens eines Polysiloxanharzes,
B) 5 bis 65 Gew.-% mindestens einer kolloidalen Kieselsäure in Form eines Kieselsols,
C) 5 bis 80 Gew.-% mindestens eines anorganischen Pigments und/oder anorganischen Füllstoffs und
D) 0 bis 30 Gew.-% eines weiteren Zusatzstoffes oder eines Gemisches aus mehreren Zusatzstoffen,
wobei die Summe der Komponenten A), B), C) und D), bezogen auf Wirksubstanz, 100 Gew.-% beträgt.

2. Mischungen nach Anspruch 1, dadurch gekennzeichnet, daß der Gehalt an D) mindestens 0,1 Gew.-% beträgt.

3. Mischungen nach einem der Ansprüche 1 oder 2, dadurch gekennzeichnet, daß Komponente A) ein hydroxyfunktionelles Polysiloxanharz ist.

4. Mischungen nach einem der Ansprüche 1 bis 3, dadurch gekennzeichnet, daß Komponente A) 40 bis 80 Gew.-% an trifunktionellen Bausteinen der allgemeinen Formel 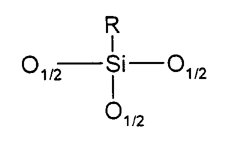 aufweist , wobei R einem C₁-C₁₄-Alkylrest entspricht.

5. Mischungen nach einem der Ansprüche 1 bis 4, dadurch gekennzeichnet, daß Komponente C) Eisenoxid, Glimmer und/oder Titandioxid ist.

6. Mischungen nach einem der Ansprüche 1 bis 5, dadurch gekennzeichnet, daß Komponente D) ein Lackadditiv, Fungizid, Bakterizid, Stabilisator, Inhibitor und/oder Katalysator, sowie Cellulose, Polyether, Polyacrylat, Polystyrol/acrylat, Polyurethan, Weichmacher und/oder eine wasserverdünnbare Polymerdispersion ist.

7. Mischungen nach Anspruch 5, dadurch gekennzeichnet, daß die wasserverdünnbare Polymerdispersion eine Styrol/Acrylat- oder eine Acrylatdispersion ist.

8. Verfahren zur Herstellung der Mischungen gemäß einem der Ansprüche 1 bis 7, dadurch gekennzeichnet, daß die Einzelkomponenten A) bis C) und gegebenenfalls D) bei Raumtemperatur miteinander verrührt werden.

9. Verfahren zur Herstellung von Beschichtungen aus Mischungen nach einem der Ansprüche 1 bis 8, dadurch gekennzeichnet, daß die Mischung auf das zu beschichtende Material aufgebracht und 1 bis 600 Minuten bei einer Temperatur von < 100°C getrocknet oder aber während der Herstellung des zu verwendenden Substrats aufgebracht wird.

10. Verwendung der Mischungen nach einem der Ansprüche 1 bis 7 zur Beschichtung von Baustoffen, Fassaden und Putzen beliebiger Art.

## Claims

1. Mixtures, containing water as a dispersing agent and
A) from 10 to 60 wt.% of at least one polysiloxane resin,
B) from 5 to 65 wt.% of at least one colloidal silica in the form of a silica sol,
C) from 5 to 80 wt.% of at least one inorganic pigment and/or inorganic filler and
D) from 0 to 30 wt.% of another additive or a mixture of several additives,
the sum of the components A), B), C) and D), based on the active substance, being 100 wt.%.

2. Mixtures according to claim 1, characterised in that the content of D) is at least 0.1 wt.%.

3. Mixtures according to one of claims 1 or 2, characterised in that component A) is a hydroxyfunctional polysiloxane resin.

4. Mixtures according to one of claims 1 to 3, characterised in that component A) contains from 40 to 80 wt.% of trifunctional structural units corresponding to the general formula 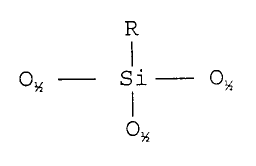 wherein R represents a C₁-C₁₄-alkyl group.

5. Mixtures according to one of claims 1 to 4, characterised in that component C) is iron oxide, mica and/or titanium dioxide.

6. Mixtures according to one of claims 1 to 5, characterised in that component D) is a coating additive, fungicide, bactericide, stabiliser, inhibitor and/or catalyst, and also cellulose, polyether, polyacrylate, polystyrene/acrylate, polyurethane, plasticiser and/or a water-dilutable polymeric dispersion.

7. Mixtures according to claim 5, characterised in that the water-dilutable polymeric dispersion is a styrene/acrylate dispersion or an acrylate dispersion.

8. Method for the preparation of mixtures according to one of claims 1 to 7, characterised in that the individual components A) to C) and optionally D) are mixed together at room temperature.

9. Method for the production of coatings from mixtures according to one of claims 1 to 8, characterised in that the mixture is applied to the material to be coated and dried for 1 to 600 minutes at a temperature of < 100°C or else is applied during the production of the substrate to be used.

10. Use of the mixtures according to one of claims 1 to 7 for the coating of building materials, facades and plasters of any kind.

## Revendications

1. Mélanges contenant de l'eau à titre d'agent de mise en dispersion, et
A) à concurrence de 10 à 60% en poids, au moins une résine de polysiloxane,
B) à concurrence de 5 à 65% en poids, au moins un acide silicique colloïdal sous forme d'un sol siliceux,
C) à concurrence de 5 à 80% en poids, au moins un pigment inorganique et/ou une matière de charge inorganique, et
D) à concurrence de 0 à 30% en poids, un additif supplémentaire ou un mélange de plusieurs additifs,
dans lesquels la somme des composants A), B), C) et D) rapportée à la substance active s'élève à 100% en poids.

2. Mélanges selon la revendication 1, caractérisés en ce que la teneur en D) s'élève à au moins 0,1% en poids.

3. Mélanges selon la revendication 1 ou 2, caractérisés en ce que le composant A) est une résine de polysiloxane hydroxyfonctionnelle.

4. Mélanges selon l'une quelconque des revendications 1 à 3, caractérisés en ce que le composant A) présente, à concurrence de 40 à 80% en poids, des constituants trifonctionnels répondant à la formule générale 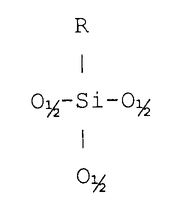 dans laquelle R représente un radical alkyle en C₁-C₁₄.

5. Mélanges selon l'une quelconque des revendications 1 à 4, caractérisés en ce que le composant C) représente de l'oxyde de fer, du mica et/ou du dioxyde de titane.

6. Mélanges selon l'une quelconque des revendications 1 à 5, caractérisés en ce que le composant D) représente un additif de laque, de vernis ou de peinture, un fongicide, un bactéricide, un stabilisateur, un inhibiteur et/ou un catalyseur, ainsi que de la cellulose, un polyéther, du polyacrylate, un polymère de styrène/acrylate, du polyuréthanne, un plastifiant et/ou une dispersion polymère apte à être diluée dans l'eau.

7. Mélanges selon la revendication 5, caractérisés en ce que la dispersion polymère apte à être diluée dans l'eau est une dispersion de styrène/acrylate ou une dispersion d'acrylate.

8. Procédé pour la préparation des mélanges selon l'une quelconque des revendications 1 à 7, caractérisé en ce qu'on délaie l'un avec l'autre, à la température ambiante, les composants individuels A) à C) et éventuellement D).

9. Procédé pour la préparation d'enductions constituées par des mélanges selon l'une quelconque des revendications 1 à 8, caractérisé en ce qu'on applique le mélange sur la matière à enduire et on la sèche pendant un laps de temps de 1 à 600 minutes à une température <100°C, ou encore on l'applique au cours de la fabrication du substrat à utiliser.

10. Utilisation des mélanges selon l'une quelconque des revendications 1 à 7, pour l'enduction de matériaux de construction, de façades et de crépis de n'importe quel type.
